(19) **Europäisches Patentamt / European Patent Office / Office européen des brevets**

(11) **EP 3 176 210 B1**

(12) # EUROPEAN PATENT SPECIFICATION

(45) Date of publication and mention
of the grant of the patent:
**27.10.2021 Bulletin 2021/43**

(51) Int Cl.:
***C08L 9/06*** (2006.01)

(21) Application number: **16198902.5**

(22) Date of filing: **15.11.2016**

(54) **PRODUCTION METHOD FOR RUBBER COMPOSITION FOR TIRES**

HERSTELLUNGSVERFAHREN FÜR KAUTSCHUKZUSAMMENSETZUNG FÜR REIFEN

PROCÉDÉ DE PRODUCTION DE COMPOSITION DE CAOUTCHOUC POUR PNEUMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2015 JP 2015236719**

(43) Date of publication of application:
**07.06.2017 Bulletin 2017/23**

(73) Proprietor: **Sumitomo Rubber Industries, Ltd.**
**Chuo-ku**
**Kobe-shi,**
**Hyogo 651-0072 (JP)**

(72) Inventor: **KOMORI, Yoshihiko**
**Kobe-shi,, Hyogo 651-0072 (JP)**

(74) Representative: **TBK**
**Bavariaring 4-6**
**80336 München (DE)**

(56) References cited:
**WO-A1-2014/105488 US-A1- 2012 214 918**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a production method for a rubber composition for tires.

Description of the Background Art

Conventionally, for the purpose of improving safety and low fuel consumption performance of a tire, silica is used as a reinforcing filler. In addition, since a sufficient effect is not obtained only with silica, a silane coupling agent that binds silica and a rubber component is used together with silica.

In order for a silane coupling agent and silica to react with each other, an alkoxy group or the like bound to the silicon atom of the silane coupling agent needs to be hydrolyzed to generate a silanol group. However, the hydrolysis reaction of the alkoxy group or the like does not proceed in a short time. Thus, in a rubber kneading step, the hydrolysis reaction of the alkoxy group or the like does not sufficiently proceed. Accordingly, the rate of the reaction between the silane coupling agent and the silica decreases, and the performance of the silica cannot be brought out to the maximum degree.

As a method that solves the above problem, International Publication No. 2011/062099 discloses blending a hydroxy acid and itaconic acid into a rubber composition.

In order to bind the silane coupling agent and the silica, a polycondensation reaction between the silane coupling agent and the silica needs to take place after a hydrolysis reaction of the silane coupling agent takes place. Then, the hydrolysis reaction is accelerated by causing the reaction system to be acidic, and the polycondensation reaction is accelerated by causing the reaction system to be basic. When a hydroxy acid and itaconic acid are blended as in the method of International Publication No. 2011/062099, the reaction system becomes acidic, so that the hydrolysis reaction is accelerated. However, the polycondensation reaction cannot be accelerated. Therefore, room is still left for improvement in the rate of the reaction between the silane coupling agent and the silica.

Further, US 2012/0214918 A1 discloses a rubber composition for a tire which is obtained by a method including a first base mixing step of mixing a rubber component, silica, a silane coupling agent, and at least one selected from the group consisting of a hydroxy acid, itaconic acid, and a salt thereof; a second base mixing step of mixing a mixture 1 obtained in the first base mixing step, stearic acid, and zinc oxide; and a final mixing step of mixing a mixture 2 obtained in the second base mixing step, a vulcanizing agent, and a vulcanization accelerator.

WO 2014/105488 A1 discloses an appearance enhancer for rubber compositions with antidegradants.

SUMMARY OF THE INVENTION

An object of the present invention is to provide a production method for a rubber composition for tires which solves the above problem and improves the rate of a reaction between a silane coupling agent and silica and by which a rubber composition for tires that has low fuel consumption performance, fracture properties, and processability that are improved in a balanced manner is obtained.

The present invention is directed to a production method for a rubber composition for tires, the method including: a base kneading step of kneading a rubber component, silica, a silane coupling agent, a water-soluble acidic substance, and a water-insoluble basic substance; and a finish kneading step of feeding a vulcanizing material to a kneaded product obtained in the base kneading step, and kneading the resultant mixture, wherein the water-insoluble basic substance is a vulcanization accelerator.

The water-soluble acidic substance preferably has a pKa ($H_2O$) of 1 to 6.

The water-soluble acidic substance is preferably at least one substance selected from the group consisting of a hydroxy acid, ascorbic acid, and itaconic acid.

The water-insoluble basic substance is preferably a guanidine.

According to the present invention, since the production method for the rubber composition for tires includes: the base kneading step of kneading the rubber component, the silica, the silane coupling agent, the water-soluble acidic substance, and the water-insoluble basic substance; and the finish kneading step of feeding the vulcanizing material to the kneaded product obtained in the base kneading step and kneading the resultant mixture, the rate of a reaction between the silane coupling agent and the silica improves, and a rubber composition for tires that has low fuel consumption performance, fracture properties, and processability that are improved in a balanced manner can be provided.

DESCRIPTION OF THE PREFERRED EMBODIMENTS

The production method according to the present invention includes: a base kneading step of kneading a rubber component, silica, a silane coupling agent, a water-soluble acidic substance, and a water-insoluble basic substance; and a finish kneading step of feeding a vulcanizing material to a kneaded product obtained in the base kneading step, and kneading the resultant mixture, wherein the water-insoluble basic substance is a vulcanization accelerator.

In the present invention, in the base kneading step, by kneading the water-soluble acidic substance and the water-insoluble basic substance with the silica and the silane coupling agent, a hydrolysis reaction is accelerated by the water-soluble acidic substance, and a polycondensation reaction is accelerated by the water-insoluble basic substance. Accordingly, a reaction between the silane coupling agent and the silica can be efficiently caused to proceed. In addition, when a water-soluble acidic substance and a water-soluble basic substance are used in combination, there is a possibility that the reaction acceleration effect of each substance is impaired by a neutralization reaction. However, in the present invention, by using the water-insoluble basic substance, a neutralization reaction can be made unlikely to take place. Owing to these effects, the rate of the reaction between the silane coupling agent and the silica significantly improves, so that it becomes possible to provide a rubber composition for tires in which low fuel consumption performance, fracture properties, and processability which are generally difficult to achieve at the same time are improved in a balanced manner.

As described above, the water-insoluble basic substance used in the present invention is unlikely to cause a neutralization reaction with the water-soluble acidic substance, so that the water-insoluble basic substance can be fed at the same time with the water-soluble acidic substance. Accordingly, it is possible to shorten the production time.

First, each component used in the present invention will be described.

(Rubber Component)

The rubber component is not particularly limited, but examples thereof include diene rubbers such as natural rubber (NR), epoxidized natural rubber (ENR), isoprene rubber (IR), butadiene rubber (BR), and styrene butadiene rubber (SBR). These rubbers may be used solely, or two or more of these rubbers may be used in combination. Among those described above, SBR and BR are preferable for the reason that low fuel consumption performance, fracture properties, and processability are achieved in a balanced manner. SBR and BR are not particularly limited, and ones that are used generally in the tire industry can be used.

For the reason that low fuel consumption performance, fracture properties, and processability are achieved in a balanced manner, the amount of SBR in 100% by mass of the rubber component in the rubber composition obtained by the production method according to the present invention is preferably not less than 30% by mass and more preferably not less than 50% by mass, and is preferably not greater than 95% by mass and more preferably not greater than 85% by mass.

For the reason that low fuel consumption performance, fracture properties, and processability are achieved in a balanced manner, the amount of BR in 100% by mass of the rubber component in the rubber composition obtained by the production method according to the present invention is preferably not less than 5% by mass and more preferably not less than 15% by mass, and is preferably not greater than 70% by mass and more preferably not greater than 50% by mass.

(Silica)

Examples of the silica include dry-process silica (silicic anhydride) and wet-process silica (hydrous silicic acid), and wet-process silica is preferable for the reason that it has a higher silanol group content.

The silica has a nitrogen adsorption specific surface area ($N_2SA$) of preferably not less than 50 $m^2/g$ and more preferably not less than 100 $m^2/g$. When the $N_2SA$ of the silica is less than 50 $m^2/g$, there is a possibility that sufficient fracture properties are not achieved. The $N_2SA$ of the silica is preferably not greater than 300 $m^2/g$ and more preferably not greater than 250 $m^2/g$. When the $N_2SA$ of the silica exceeds 300 $m^2/g$, there is a possibility that dispersion of the silica in the rubber becomes difficult, so that poor dispersion is caused.

The nitrogen adsorption specific surface area of the silica is a value measured by the BET method according to ASTM D3037-81.

The amount of the silica per 100 parts by mass of the rubber component in the rubber composition obtained by the production method according to the present invention is preferably not less than 5 parts by mass, more preferably not less than 25 parts by mass, and further preferably not less than 35 parts by mass. When the amount of the silica is less than 5 parts by mass, there is a possibility that sufficient low fuel consumption performance is not achieved. The amount of the silica is preferably not greater than 150 parts by mass, more preferably not greater than 100 parts by mass, and further preferably not greater than 80 parts by mass. When the amount of the silica exceeds 150 parts by mass, there is a possibility that dispersion of the silica in the rubber becomes difficult, so that poor dispersion is caused.

(Silane Coupling Agent)

The silane coupling agent is not particularly limited, but examples thereof include sulfide-based silane coupling agents, vinyl-based silane coupling agents, amino-based silane coupling agents, glycidoxy-based silane coupling agents, nitro-based silane coupling agents, and chloro-based silane coupling agents. Among those described above, sulfide-based silane coupling agents are preferable, and bis(3-triethoxysilylpropyl)tetrasulfide and bis(3-triethoxysilylpropyl)disulfide are more preferable, for the reason that favorable fracture properties are achieved.

The amount of the silane coupling agent per 100 parts by mass of the silica in the rubber composition obtained by the production method according to the present invention is preferably not less than 0.1 parts by mass, more preferably not less than 2 parts by mass, further preferably not less than 4 parts by mass, and particularly preferably not less than 6 parts by mass. When the amount of the silane coupling agent is less than 0.1 parts by mass, a sufficient effect of decreasing rolling resistance (improvement of low fuel consumption performance) tends not to be obtained. The amount of the silane coupling agent is preferably not greater than 20 parts by mass, more preferably not greater than 15 parts by mass, and further preferably not greater than 10 parts by mass. When the amount of the silane coupling agent exceeds 20 parts by mass, a rolling resistance decrease (low fuel consumption performance improvement) effect corresponding to the added amount of the silane coupling agent which is expensive tends not to be obtained.

(Water-Soluble Acidic Substance)

The water-soluble acidic substance is not particularly limited as long as it is a substance that is soluble in water and exhibits acidity. However, a substance having a pKa ($H_2O$) of 1 to 6 and a solubility (20°C) of 100 g/L-$H_2O$ is preferable.

The pKa ($H_2O$) of the water-soluble acidic substance is preferably not less than 1, more preferably not less than 2, and further preferably not less than 3. When the pKa ($H_2O$) of the water-soluble acidic substance is less than 1, the acidity is excessively high, so that there is a possibility that a facility is damaged. The pKa ($H_2O$) of the water-soluble acidic substance is preferably not greater than 6, more preferably not greater than 5, and further preferably not greater than 4.5. When the pKa ($H_2O$) of the water-soluble acidic substance exceeds 6, the acidity is low, so that there is a possibility that a sufficient effect is not obtained.

For the reason that the advantageous effects of the present invention are favorably obtained, the solubility (20°C) of the water-soluble acidic substance is preferably not less than 100 g/L-$H_2O$, more preferably not less than 200 g/L-$H_2O$, and further preferably not less than 300 g/L-$H_2O$. The upper limit of the solubility (20°C) is not particularly limited.

As the water-soluble acidic substance, at least one substance selected from the group consisting of a hydroxy acid, ascorbic acid, and itaconic acid is preferable, and the hydroxy acid is more preferable, for the reason that it has a low melting point and is dissolved and dispersed well during rubber kneading. Each of the hydroxy acid, ascorbic acid, and itaconic acid may be in the form of a salt as long as it exhibits acidity.

The hydroxy acid in the present invention is a carboxylic acid having a hydroxy group (i.e., a compound having a hydroxy group and a carboxyl group). Examples of the hydroxy acid include aliphatic hydroxy acids such as lactic acid, malic acid, tartaric acid, citric acid, cerebronic acid, tartronic acid, hydroxybutyric acid, leucic acid, glycolic acid, and pantoic acid, and aromatic hydroxy acids such as salicylic acid and benzilic acid. Among those described above, aliphatic hydroxy acids are preferable, lactic acid, malic acid, tartaric acid, and citric acid are more preferable, and malic acid and citric acid are further preferable, for the reason that they are environmentally-friendly.

In the rubber composition kneading step, powder is preferably used as the water-soluble acidic substance. Accordingly, the rubber composition can be efficiently produced at low cost.

The amount of the water-soluble acidic substance per 100 parts by mass of the silica in the rubber composition obtained by the production method according to the present invention is preferably not less than 0.1 parts by mass, more preferably not less than 0.3 parts by mass, and further preferably not less than 0.5 parts by mass. When the amount of the water-soluble acidic substance is less than 0.1 parts by mass, there is a possibility that a sufficient effect of improving the rate of the reaction between the silane coupling agent and the silica is not obtained. The amount of the water-soluble acidic substance is preferably not greater than 10 parts by mass, more preferably not greater than 5 parts by mass, and further preferably not greater than 1 part by mass. When the amount of the water-soluble acidic substance exceeds 10 parts by mass, there is a possibility that an amount of foreign matter in the rubber becomes large, the rolling resistance increases, and the low fuel consumption performance diminishes.

(Water-Insoluble Basic Substance)

The water-insoluble basic substance in the present invention is not particularly limited as long as it is a vulcanization accelerator that is insoluble in water and exhibits basicity.

As the water-insoluble basic substance, guanidines are preferable for the reason that the effect of accelerating the polycondensation reaction. Guanidines are substances used also as vulcanization accelerators, and specific examples thereof include 1,3-diphenylguanidine, 1,3-di-o-tolylguanidine, 1-o-tolylbiguanide, the di-o-tolylguanidine salt of dicatechol borate, 1,3-di-o-cumenylguanidine, 1,3-di-o-biphenylguanidine, and 1,3-di-o-cumenyl-2-propionylguanidine. Among those described above, 1,3-diphenylguanidine, 1,3-di-o-tolylguanidine, and 1-o-tolylbiguanide are preferable, and 1,3-diphenylguanidine is more preferable, for the reason that the reactivity is high and the effect of accelerating the polycondensation reaction is particularly great.

The amount of the water-insoluble basic substance per 100 parts by mass of the silica in the rubber composition obtained by the production method according to the present invention is preferably not less than 0.1 parts by mass, more preferably not less than 0.5 parts by mass, and further preferably not less than 0.8 parts by mass. When the amount of the water-insoluble basic substance is less than 0.1 parts by mass, there is a possibility that a sufficient effect of improving the rate of the reaction between the silane coupling agent and the silica is not obtained. The amount of the water-insoluble basic substance is preferably not greater than 15 parts by mass, more preferably not greater than 10 parts by mass, and further preferably not greater than 3 parts by mass. When the amount of the water-insoluble basic substance exceeds 15 parts by mass, there is a possibility that an amount of foreign matter in the rubber becomes large, the rolling resistance increases, and the low fuel consumption performance diminishes.

The amount of the water-insoluble basic substance described here means the amount of the water-insoluble basic substance fed in the base kneading step, and the amount of the water-insoluble basic substance fed in another step, such as a vulcanization accelerator fed in the finish kneading step, is not included.

(Vulcanizing Material)

As the vulcanizing material, for example, sulfur, a vulcanization accelerator, or the like can be used.

The sulfur is not particularly limited, and one that is used generally in the tire industry can be used, but powder sulfur is preferable.

For the reason that low fuel consumption performance, fracture properties, and processability are achieved in a balanced manner, the amount of the sulfur per 100 parts by mass of the rubber component in the rubber composition obtained by the production method according to the present invention is preferably not less than 0.1 parts by mass and more preferably not less than 0.5 parts by mass, and is preferably not greater than 8 parts by mass and more preferably not greater than 5 parts by mass.

The vulcanization accelerator is not particularly limited, and one that is used generally in the tire industry can be used as the vulcanization accelerator, but examples of the vulcanization accelerator include guanidines, sulfenamides, thiazoles, thiurams, dithiocarbamates, thioureas, and xanthates. These vulcanization accelerators may be used solely, or two or more of these vulcanization accelerators may be used in combination. Among those described above, a guanidine and another vulcanization accelerator are preferably used in combination, and a guanidine and a sulfenamide are more preferably used in combination. Examples and the like of guanidines are the same as described in relation to the water-insoluble basic substance.

For the reason that low fuel consumption performance, fracture properties, and processability are achieved in a balanced manner, the amount of the vulcanization accelerator per 100 parts by mass of the rubber component in the rubber composition obtained by the production method according to the present invention is preferably not less than 0.5 parts by mass and more preferably not less than 1.5 parts by mass, and is preferably not greater than 10 parts by mass and more preferably not greater than 8 parts by mass.

The amount of the vulcanization accelerator described here is the total amount of the vulcanization accelerator used in all steps, and the amount of a vulcanization accelerator such as guanidines used as the water-insoluble basic substance is also included.

(Other Components)

In the rubber composition obtained by the production method according to the present invention, in addition to the above components, compounding ingredients that are used generally in production of a rubber composition, such as oil, wax, an antioxidant, zinc oxide, and stearic acid, may be blended as appropriate.

Stearic acid is insoluble in water and is not included in the water-soluble acidic substance.

Next, each kneading step in the production method according to the present invention will be described.

(Base Kneading Step)

In the base kneading step, the rubber component, the silica, the silane coupling agent, the water-soluble acidic substance, and the water-insoluble basic substance are kneaded. The kneading method is not particularly limited, and a known kneading machine such as a Banbury mixer and a kneader can be used. In addition, the kneading time (the entire kneading time in the base kneading step) is preferably 4 to 30 minutes, and the kneading temperature is preferably 130 to 160°C.

Each of the rubber component, the silica, the silane coupling agent, the water-soluble acidic substance, and the water-insoluble basic substance may be fed in the whole amount at one time or may be divided and fed several times. For the reason that the reaction between the silica and the silane coupling agent can be efficiently caused to proceed, each of the rubber component, the water-soluble acidic substance, and the water-insoluble basic substance is preferably fed in the whole amount at one time, and each of the silica and the silane coupling agent is preferably divided and fed several times. In the case where each of the silica and the silane coupling agent is divided and fed several times, preferably, each of the rubber component, the silica, the silane coupling agent, the water-soluble acidic substance, and the water-insoluble basic substance is fed in 50 to 80% of the whole amount and kneaded at the initial stage of kneading the rubber component, the silica, the silane coupling agent, the water-soluble acidic substance, and the water-insoluble basic substance, and then the remainder is fed at one time.

In the base kneading step, at least the rubber component, the silica, the silane coupling agent, the water-soluble acidic substance, and the water-insoluble basic substance only need to be kneaded. However, together with these materials, oil, wax, an antioxidant, zinc oxide, stearic acid, etc. may be kneaded.

Stearic acid, the wax, the antioxidant, and zinc oxide are preferably fed after the rubber component, the silica, the silane coupling agent, the water-soluble acidic substance, and the water-insoluble basic substance are kneaded for a predetermined time (preferably 0.5 to 10 minutes, more preferably 0.5 to 3 minutes).

(Finish Kneading Step)

In the finish kneading step, the vulcanizing material is fed to the kneaded product obtained in the base kneading step, and the resultant mixture is kneaded. The kneading method is not particularly limited, and a known kneading machine such as an open roll can be used. In addition, the kneading time is preferably 3 to 15 minutes, and the kneading temperature is preferably 40 to 80°C.

(Other Steps)

The kneaded product (unvulcanized rubber composition) obtained in the finish kneading step is extruded into a shape of a component such as a tread, is formed on a tire forming machine by an ordinary method, and is attached together with other tire components, thereby forming an unvulcanized tire. Thereafter, the unvulcanized tire is heated and pressurized within a vulcanizing machine, whereby a tire can be manufactured. The manufactured tire is suitably used as a tire for a passenger car, a tire for a bus, a tire for a truck, or the like.

EXAMPLES

The present invention will be specifically described by means of examples, but the present invention is not limited to these examples.

The following will collectively describe various chemicals used in Examples and Comparative Examples.

SBR: Nipol NS210 (S-SBR) manufactured by Zeon Corporation.

BR: BR150B manufactured by Ube Industries, Ltd.

Silica: Ultrasil VN3 ($N_2SA$: 175 $m^2$/g) manufactured by Evonik Degussa GmbH.

Silane coupling agent: Si69 (bis(3-triethoxysilylpropyl)tetrasulfide) manufactured by Evonik Degussa GmbH.

Oil: X140 (aroma oil) manufactured by Japan Energy Corporation.

Citric acid: purified citric acid (anhydrous, pKa ($H_2O$): 3.1, solubility (20°C): 730 g/L-$H_2O$) manufactured by Tokyo Chemical Industry Co., Ltd.

Malic acid: malic acid (DL-malic acid, pKa ($H_2O$): 3.4, solubility (20°C): 558 g/L-$H_2O$) manufactured by Wako Pure Chemical Industries, Ltd.

Ascorbic acid: ascorbic acid (pKa ($H_2O$): 4.2, solubility (20°C): 330 g/L-$H_2O$) manufactured by Tokyo Chemical Industry Co., Ltd.

Vulcanization accelerator DPG: Nocceler D (1,3-diphenylguanidine) manufactured by Ouchi Shinko Chemical Industrial Co., Ltd.

Wax: Sunnoc N manufactured by Ouchi Shinko Chemical Industrial Co., Ltd.

Antioxidant: Nocrac 6C (N-phenyl-N'-(1,3-dimethylbutyl)-p-phenylenediamine) manufactured by Ouchi Shinko Chemical Industrial Co., Ltd.

Zinc oxide: two types of zinc oxide manufactured by Mitsui Mining & Smelting Co., Ltd.

Stearic acid: bead stearic acid "Tsubaki" manufactured by NOF Corporation.

Sulfur: sulfur 200 mesh, manufactured by Tsurumi Chemical Industry Co., Ltd.

Vulcanization accelerator CZ: Nocceler NS (N-tert-butyl-2-benzothiazolylsulfenamide) manufactured by Ouchi Shinko Chemical Industrial Co., Ltd.

Examples and Comparative Examples

(Base Kneading Step)

The materials described at items of base kneading in Table 1 were kneaded by using a 1.7-L Banbury mixer to obtain a kneaded product. X-1, X-2, and Y in Table 1 mean that each material at each item was fed and kneaded in the order of X-1, X-2, and Y. The kneading temperature and the kneading time for each item are as follows.

> X-1     kneading temperature: 150°C, kneading time: 5 minutes
> X-2     kneading temperature: 150°C, kneading time: 5 minutes
> Y       kneading temperature: 150°C, kneading time: 5 minutes

(Finish Kneading Step)

The materials described at items of finish kneading in Table 1 were fed to the kneaded product obtained in the base kneading step, and the resultant mixture was kneaded at 70°C for 8 minutes by using an open roll to obtain au unvulcanized rubber composition.

(Vulcanizing Step)

The unvulcanized rubber composition obtained in the finish kneading step was pressed and vulcanized by a 0.5 mm-thick mold at 170°C for 20 minutes to obtain a vulcanized rubber composition.
The following evaluation was made for the obtained unvulcanized rubber composition and vulcanized rubber composition. The results are shown in Table 1.

(Fracture Energy Index)

According to JIS K6251, "Rubber, vulcanized or thermoplastics-Determination of tensile stress-strain properties", a tensile test was carried out by using a No. 3 dumbbell type test piece composed of a sheet-like test piece having a thickness of 2 mm and formed from the above vulcanized rubber composition, and fracture energy (breaking strength (MPa) $\times$ elongation at break (%)) was measured. The results are shown as indexes based on the following calculation formula. A higher fracture energy index indicates that the fracture properties are more excellent.

$$\text{(Fracture energy index)} = \text{(fracture energy with each composition)} / \text{(fracture energy of Comparative Example 1)} \times 100$$

(Rolling Resistance Index)

By using a viscoelastic spectrometer VES (manufactured by Iwamoto Seisakusho), tanδ of each vulcanized rubber composition was measured under the conditions of: a temperature of 70°C; an initial strain of 10%; and a dynamic strain of 2%. The results are shown as indexes based on the following calculation formula. A higher rolling resistance index indicates that the low fuel consumption performance is more excellent.

$$\text{(Rolling resistance index)} = \text{(tan}\delta \text{ of Comparative Example 1)} / \text{(tan}\delta \text{ with each composition)} \times 100$$

(Processability Index (Mooney Viscosity))

The Mooney viscosity of the unvulcanized rubber composition was measured at 130°C according to JIS K6300. The results are shown as indexes based on the following calculation formula. A higher index indicates that the Mooney viscosity is lower and the processability is more excellent.

$$(\text{Processability index}) = (\text{ML}_{1+4} \text{ of Comparative Example 1}) / (\text{ML}_{1+4} \text{ with each}$$

$$\text{composition}) \times 100$$

[Table 1]

| | | | | Comparative Example | | Example | | |
|---|---|---|---|---|---|---|---|---|
| | | | | 1 | 2 | 1 | 2 | 3 |
| Blending amount (parts by mass) | Base kneading | X-1 | SBR | 80 | 80 | 80 | 80 | 80 |
| | | | BR | 20 | 20 | 20 | 20 | 20 |
| | | | Silica | 55 | 55 | 55 | 55 | 55 |
| | | | Silane coupling agent | 4.4 | 4.4 | 4.4 | 4.4 | 4.4 |
| | | | Oil | 25 | 25 | 25 | 25 | 25 |
| | | | Citric acid | - | - | 0.5 | - | - |
| | | | Malic acid | - | 0.5 | - | 0.5 | - |
| | | | Ascorbic acid | - | - | - | - | 0.5 |
| | | | Vulcanization accelerator DPG | - | - | 1 | 1 | 1 |
| | | X-2 | Silica | 20 | 20 | 20 | 20 | 20 |
| | | | Silane coupling agent | 1.6 | 1.6 | 1.6 | 1.6 | 1.6 |
| | | Y | Wax | 2 | 2 | 2 | 2 | 2 |
| | | | Antioxidant | 2 | 2 | 2 | 2 | 2 |
| | | | Zinc oxide | 1.5 | 1.5 | 1.5 | 1.5 | 1.5 |
| | | | Stearic acid | 2 | 2 | 2 | 2 | 2 |
| | Finish kneading | | Sulfur | 1.5 | 1.5 | 1.5 | 1.5 | 1.5 |
| | | | Vulcanization accelerator CZ | 1.7 | 1.7 | 1.7 | 1.7 | 1.7 |
| | | | Vulcanization accelerator DPG | 2 | 2 | 1 | 1 | 1 |
| Evaluation | | | Fracture energy index | 100 | 98 | 109 | 108 | 106 |
| | | | Rolling resistance index | 100 | 103 | 104 | 103 | 103 |
| | | | Processability index | 100 | 95 | 108 | 105 | 104 |

From Table 1, it was found that the Examples obtained by the production method including the base kneading step of kneading the rubber component, the silica, the silane coupling agent, the water-soluble acidic substance (citric acid, malic acid, ascorbic acid), and the water-insoluble basic substance (vulcanization accelerator DPG) and the finish kneading step of feeding the vulcanizing material to the kneaded product obtained in the base kneading step and kneading the resultant mixture have low fuel consumption performance, fracture properties, and processability that are improved in a balanced manner.

Provided is a production method for a rubber composition for tires which improves the rate of a reaction between a silane coupling agent and silica and by which a rubber composition for tires that has low fuel consumption performance, fracture properties, and processability that are improved in a balanced manner is obtained. The production method for the rubber composition for tires includes: a base kneading step of kneading a rubber component, silica, a silane coupling agent, a water-soluble acidic substance, and a water-insoluble basic substance; and a finish kneading step of feeding a vulcanizing material to a kneaded product obtained in the base kneading step, and kneading the resultant mixture.

**Claims**

1. A production method for a rubber composition for tires, the method comprising:

   a base kneading step of kneading a rubber component, silica, a silane coupling agent, a water-soluble acidic substance, and a water-insoluble basic substance; and

a finish kneading step of feeding a vulcanizing material to a kneaded product obtained in the base kneading step, and kneading the resultant mixture,

wherein the water-insoluble basic substance is selected from the group consisting of 1,3-diphenylguanidine, 1,3-di-o-tolylguanidine, 1-o-tolylbiguanide, the di-o-tolylguanidine salt of dicatechol borate, 1,3-di-o-cumenylguanidine, 1,3-di-o-biphenylguanidine, and 1,3-di-o-cumenyl-2-propionylguanidine.

2. The production method for the rubber composition for tires according to claim 1, wherein the water-soluble acidic substance has a pKa ($H_2O$) of 1 to 6.

3. The production method for the rubber composition for tires according to claim 1 or 2, wherein the water-soluble acidic substance is at least one substance selected from the group consisting of a hydroxy acid, ascorbic acid, and itaconic acid.

4. The production method for the rubber composition for tires according to any one of claims 1 to 3, wherein the water-insoluble basic substance is 1,3-diphenylguanidine.

5. The production method for the rubber composition for tires according to any one of claims 1 to 4, wherein the water-insoluble basic substance is fed at the same time with the water-soluble acidic substance.

6. The production method for the rubber composition for tires according to any one of claims 1 to 5, wherein the amount of the water-soluble acidic substance per 100 parts by mass of the silica in the rubber composition is not less than 0.1 parts by mass and not greater than 10 parts by mass.

7. The production method for the rubber composition for tires according to any one of claims 1 to 6, wherein the amount of the water-insoluble basic substance per 100 parts by mass of the silica in the rubber composition is not less than 0.1 parts by mass and not greater than 15 parts by mass.

## Patentansprüche

1. Herstellungsverfahren für eine Kautschukzusammensetzung für Reifen, wobei das Verfahren umfasst:

einen Basisknetschritt des Knetens einer Kautschukkomponente, Siliciumoxid, eines Silankupplungsmittels, einer wasserlöslichen sauren Substanz und einer wasserunlöslichen basischen Substanz; und

einen Fertigknetschritt des Zuführens eines Vulkanisiermaterials zu einem gekneteten Produkt, das in dem Basisknetschritt erhalten wurde, und des Knetens der resultierenden Mischung,

wobei die wasserunlösliche basische Substanz ausgewählt ist aus der Gruppe bestehend aus 1,3-Diphenylguanidin, 1,3-Di-o-tolylguanidin, 1-o-Tolylbiguanid, dem Di-o-tolylguanidin-Salz von Dicatecholborat, 1,3-Di-o-cumenylguanidin, 1,3-Di-o-biphenylguanidin und 1,3-Di-o-cumenyl-2-propionylguanidin.

2. Herstellungsverfahren für die Kautschukzusammensetzung für Reifen nach Anspruch 1, wobei die wasserlösliche saure Substanz einen pKa ($H_2O$) von 1 bis 6 aufweist.

3. Herstellungsverfahren für die Kautschukzusammensetzung für Reifen nach Anspruch 1 oder 2, wobei die wasserlösliche saure Substanz zumindest eine Substanz ist, die aus der Gruppe ausgewählt ist, die aus einer Hydroxysäure, Ascorbinsäure und Itaconsäure besteht.

4. Herstellungsverfahren für die Kautschukzusammensetzung für Reifen nach einem der Ansprüche 1 bis 3, wobei die wasserunlösliche basische Substanz 1,3-Diphenylguanidin ist.

5. Herstellungsverfahren für die Kautschukmischung für Reifen nach einem der Ansprüche 1 bis 4, wobei die wasserunlösliche basische Substanz gleichzeitig mit der wasserlöslichen sauren Substanz zugeführt wird.

6. Herstellungsverfahren für die Kautschukzusammensetzung für Reifen nach einem der Ansprüche 1 bis 5, wobei die Menge der wasserlöslichen sauren Substanz pro 100 Masseteile des Siliciumoxids in der Kautschukzusammensetzung nicht weniger als 0,1 Masseteile und nicht mehr als 10 Masseteile beträgt.

**7.** Herstellungsverfahren für die Kautschukzusammensetzung für Reifen nach einem der Ansprüche 1 bis 6, wobei die Menge der wasserunlöslichen basischen Substanz pro 100 Masseteile des Siliciumoxids in der Kautschukzusammensetzung nicht weniger als 0,1 Masseteile und nicht mehr als 15 Masseteile beträgt.

**Revendications**

**1.** Procédé de production d'une composition de caoutchouc pour pneus, le procédé comprenant :

une étape de malaxage de base consistant à malaxer un composant caoutchouc, de la silice, un agent de couplage au silane, une substance acide soluble dans l'eau, et une substance basique insoluble dans l'eau ; et une étape de malaxage de finition consistant à délivrer un matériau de vulcanisation à un produit malaxé obtenu dans l'étape de malaxage de base, et à malaxer le mélange résultant,
dans lequel la substance basique insoluble dans l'eau est choisie dans le groupe constitué par la 1,3-diphénylguanidine, la 1,3-di-o-tolylguanidine, le 1-o-tolylbiguanide, le sel dicatéchol-borate de di-o-tolylguanidine, la 1,3-di-o-cuménylguanidine, la 1,3-di-o-biphénylguanidine, et la 1,3-di-o-cuményl-2-propionylguanidine.

**2.** Procédé de production d'une composition de caoutchouc pour pneus selon la revendication 1, dans lequel la substance acide soluble dans l'eau a un pKa ($H_2O$) de 1 à 6.

**3.** Procédé de production d'une composition de caoutchouc pour pneus selon la revendication 1 ou 2, dans lequel la substance acide soluble dans l'eau est au moins une substance choisie dans le groupe constitué par un hydroxyacide, l'acide ascorbique, et l'acide itaconique.

**4.** Procédé de production d'une composition de caoutchouc pour pneus selon l'une quelconque des revendications 1 à 3, dans lequel la substance basique insoluble dans l'eau est la 1,3-diphénylguanidine.

**5.** Procédé de production d'une composition de caoutchouc pour pneus selon l'une quelconque des revendications 1 à 4, dans lequel la substance basique insoluble dans l'eau est introduite en même temps que la substance acide soluble dans l'eau.

**6.** Procédé de production d'une composition de caoutchouc pour pneus selon l'une quelconque des revendications 1 à 5, dans lequel la quantité de la substance acide soluble dans l'eau pour 100 parties en masse de la silice dans la composition de caoutchouc n'est pas inférieure à 0,1 partie en masse et pas supérieure à 10 parties en masse.

**7.** Procédé de production d'une composition de caoutchouc pour pneus selon l'une quelconque des revendications 1 à 6, dans lequel la quantité de la substance basique insoluble dans l'eau pour 100 parties en masse de la silice dans la composition de caoutchouc n'est pas inférieure à 0,1 partie en masse et pas supérieure à 15 parties en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011062099 A
- US 20120214918 A1

- WO 2014105488 A1